# EUROPÄISCHE PATENTSCHRIFT

(11) **EP 3 882 505 B1**
(45) Veröffentlichungstag und Bekanntmachung des Hinweises auf die Patenterteilung: **13.03.2024**
(21) Anmeldenummer: 20163269.2
(22) Anmeldetag: 16.03.2020
(51) Int. Cl.: F16P 3/14

(54) **ÜBERWACHUNGSEINRICHTUNG UND EIN VERFAHREN ZUM BETRIEB EINER ÜBERWACHUNGSEINRICHTUNG**
MONITORING DEVICE AND METHOD FOR OPERATING SAME
DISPOSITIF DE SURVEILLANCE ET PROCÉDÉ DE FONCTIONNEMENT D'UN DISPOSITIF DE SURVEILLANCE

(43) Veröffentlichungstag der Anmeldung: 22.09.2021
(73) Patentinhaber: Leuze electronic GmbH + Co. KG, 73277 Owen/Teck (DE)
(72) Erfinder: Brunner, Rolf, 82223 Eichenau (DE)
(74) Vertreter: Ruckh, Rainer Gerhard

(56) Entgegenhaltungen:
- EP-A1- 2 249 075
- EP-A1- 3 339 715
- DE-A1-102017 108 531
- ALLEN BRADLEY: "User Manual Safezone Multizone Safety Laser Scanner", INTERNET CITATION, 1. Mai 2005 (2005-05-01), Seiten 1-79, XP002591411, Gefunden im Internet: URL:http://samplecode.rockwellautomation.c om/idc/groups/literature/documents/um/442l -um002_-en-p.pdf [gefunden am 2010-07-09]

## Beschreibung

Die Erfindung betrifft eine Überwachungseinrichtung und ein Verfahren zum Betrieb einer Überwachungseinrichtung.

Derartige Überwachungseinrichtungen können zur Sicherung von Gefahrenbereichen an stationären Maschinen oder Anlagen vorgesehen sein, wobei dort ein Gefahrenbereich, in welchem von der Maschine oder Anlage gefahrbringende Bewegungen ausgeführt werden, abzusichern ist.

Weiterhin können derartige Überwachungseinrichtungen zur Sicherung des Vorfelds an Fahrzeugen eingesetzt werden, um einen Kollisionsschutz für das Fahrzeug zu realisieren.

In beiden Fällen ist es bekannt, distanzmessende optische Sensoren zur Überwachung von Gefahrenbereichen einzusetzen, wobei diese beispielsweise als Flächendistanzsensor, das heißt als scannende Distanzsensoren, ausgebildet sein können.

Zur Anpassung an verschiedene beziehungsweise sich ändernde Gefahrenbereiche ist es bekannt, dass im optischen Sensor unterschiedliche Schutzfelder gespeichert sind. Je nach Gefahrensituation wird im optischen Sensor ein Schutzfeld aktiviert, sodass innerhalb dieses vorgegebenen Schutzfelds eine Objektüberwachung erfolgt.

Im optischen Sensor wird dann abhängig davon, ob im vorgegebenen Schutzfeld ein Objekt detektiert wird, ein binäres Schaltsignal mit einem entsprechenden Schaltzustand "Objekt vorhanden" ein, wird eine Sicherheitsfunktion ausgelöst, wodurch ein sicherer Betriebszustand herbeigeführt wird, der Gefährdungen von Personen vermeidet. Bei der Überwachung einer gefahrbringenden stationären Maschine oder Anlage kann die Sicherheitsfunktion darin bestehen, die Maschine oder Anlage stillzusetzen. Bei der Überwachung eines Fahrzeugs kann die Sicherheitsfunktion darin bestehen, das Fahrzeug anzuhalten.

Ein Problem bei derartigen Überwachungseinrichtungen besteht darin, das Schutzfeld an sich ändernde Randbedingungen anzupassen.

Die DE 10 2017 108 531 A1 betrifft ein Sicherungssystem für eine Objektförderanlage mit wenigstens einem Sicherheitssensor und einer elektronische Steuereinrichtung, die mit dem Sicherheitssensor in Signalverbindung steht. Der Sicherheitssensor bildet im Betrieb wenigstens zwei Überprüfungs-Schutzfelder aus, deren Verletzung durch Eindringen eines Objekts jeweils erfasst wird. Der Sicherheitssensor ist derart angeordnet und ausgebildet, dass die Überprüfung-Schutzfelder zumindest in einem Prüfbereich bezüglich einer Förderrichtung der Objektförderanlage einen Querversatz aufweisen. Die elektronische Steuereinrichtung ist dazu ausgebildet, bei einem Durchgang eines Objekts durch den Prüfbereich die zeitliche Abfolge, in welcher die Überprüfungs-Schutzfelder verletzt und/oder nach einer Verletzung wieder freigegeben werden, zu ermitteln, die ermittelte zeitliche Abfolge mit einer vorgegebenen zeitlichen Abfolge zu vergleichen und eine Sicherheitsfunktion auszulösen, wenn die ermittelte zeitliche Abfolge von der vorgegebenen zeitlichen Abfolge abweicht.

Die EP 2 249 075 betrifft eine Zugangsabsicherungssystem mit einem Sicherheits-Laserscanner, wobei der Sicherheits-Laserscanner im Betrieb ein Schutzfeld und mindestens ein erstes und ein zweites Warnfeld, die sich in zumindest einer Richtung über das Schutzfeld hinaus erstrecken und außerhalb des Schutzfelds zumindest teilweise nicht überlappen, überwacht. Der Sicherheits-Laserscanner weist mindestens eine Interface-Schnittstelle auf. Zudem vorgesehen ist ein Controller mit mindestens einer Interface-Schnittstelle, die mit der mindestens einen Interface-Schnittstelle des Sicherheits-Laserscanners zur Übermittlung von Messergebnissen des Sicherheits-Laserscanners an den Controller und/oder von Steuerbefehlen des Controllers an den Sicherheits-Laserscanner in Signalkommunikation steht, wobei die Logik des Controllers so aufgebaut ist, dass beim Eindringen eines Objekts in das Schutzfeld eine Sicherheitsfunktion ausgelöst wird, die jedoch dann unterdrückt wird, wenn zuvor ein Eindringen des Objekts sowohl in das erste Warnfeld als auch in das zweite Warnfeld festgestellt wurde.

In ALLEN BRADLEY:"User Manuel Safezone Multizone Safety Laser Scanner", INTERNET CITATION, 1. Mai 2005 (2005-05-01), Seiten 1-79, XP002591411, Gefunden im Internet: URL:http://samplecode.rockwellautomation.com/idc/groups/literature/documents/um/4421-um002-en-p-pdf ist ein Sicherheits-Laserscanner beschrieben, mit dem in unterschiedlichen Schutzfeldern und Warnfeldern Objektüberwachungen durchgeführt werden.

Die EP 3 339 715 A1 betrifft ein Zugangsabsicherungssystem. Das Zugangsabsicherungssystem umfasst einen ersten Sicherheitssensor, einen zweiten Sicherheitssensor und eine elektronische Steuereinrichtung, die mit dem ersten und dem zweiten Sicherheitssensor in Signalverbindung steht. Der erste und der zweite Sicherheitssensor sind Laserscanner, die im Betrieb jeweils ein Sicherheits-Schutzfeld und jeweils wenigstens ein erstes Detektions-Schutzfeld ausbilden und derart angeordnet sind, dass die ersten Detektions-Schutzfelder wenigstens bereichsweise nicht überlappen. Die elektronische Steuereinrichtung ist dazu ausgebildet, beim Eindringen eines Objekts in das Sicherheits-Schutzfeld des ersten und/oder des zweiten Sicherheitssensors eine Sicherheitsfunktion auszulösen und den Betriebszustand des Zugangsabsicherungssystems zu ändern, wenn ein Eindringen des Objekts sowohl in das erste Detektions-Schutzfeld des ersten Sicherheitssensors als auch in das erste Detektions-Schutzfeld des zweiten Sicherheitssensors festgestellt wird.

Der Erfindung liegt die Aufgabe zugrunde eine Überwachungseinrichtung der eingangsgenannten Art bereitzustellen, mittels derer eine verbesserte Sicherung von Gefahrenbereichen ermöglicht wird.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft eine Überwachungseinrichtung mit einem optischen Sensor, mittels dessen eine Objektüberwachung innerhalb eines Schutzfeldes durchgeführt wird. Zwei Konturerkennungsfelder mit einander zumindest näherungsweise entsprechenden Längen, wobei die Längen so dimensioniert sind, dass die Konturerkennungsfelder über das Schutzfeld hervorstehen und dort zumindest teilweise nicht überlappen, sind vorgesehen. Entweder ist ein über das Schutzfeld hervorstehendes mit den ersten beiden Konturerkennungsfeldern zumindest teilweise nicht überlappendes drittes Konturerkennungsfeld vorgesehen und es ist eine Zeitüberwachungseinheit vorgesehen, mittels derer die zeitliche Folge von Objekteingriffen in den beiden ersten Konturerkennungsfeldern überprüfbar ist, abhängig davon, ob und in welcher zeitlichen Reihenfolge Objekteingriffe in den ersten beiden Konturerkennungsfeldern Objekteingriffe registriert werden und abhängig davon ob im dritten Konturerkennungsfeld ein Objekteingriff vorliegt oder nicht.

Die Erfindung betrifft weiterhin ein entsprechendes Verfahren.

Die Grundfunktion der erfindungsgemäßen Überwachungseinrichtung besteht darin, mit dem optischen Sensor eine Schutzfeldüberwachung durchzuführen, wodurch ein Gefahrenbereich an einer gefahrbringenden Anlage oder Maschine abgesichert wird.

Besonders vorteilhaft wird mit der Überwachungseinrichtung eine Gefahrenbereichsüberwachung an einer mobilen Maschine durchgeführt.

Insbesondere ist die mobile Maschine ein Roboter oder ein fahrerloses Transportfahrzeug.

Zur Durchführung der Schutzfeldüberwachung ist vorteilhaft eine dem optischen Sensor zugeordnete Auswerteeinheit vorgesehen, die im optischen Sensor integriert sein kann oder eine externe Einheit bilden kann.

Dabei ist vorteilhaft die externe Auswerteeinheit eine sichere Steuerung, die über eine Schnittstelle mit dem optischen Sensor verbunden ist.

Generell wird in der Auswerteeinheit abhängig von Sensorsignalen des optischen Sensors ein Schaltsignal generiert, dessen Schaltzustände angeben ob sich ein Objekt im Schutzfeld befindet oder nicht.

Bei einer Objektdetektion im Schutzfeld wird eine Sicherheitsfunktion ausgelöst.

Die Sicherheitsfunktion kann dadurch ausgebildet sein, dass die zu überwachende Anlage oder Maschine stillgesetzt wird. Bei einer Vorfeldüberwachung eines Fahrzeugs besteht die Sicherheitsfunktion darin, das Fahrzeug anzuhalten.

Erfindungsgemäß sind zusätzlich zu dem Schutzfeld wenigstens zwei Konturerkennungsfelder vorgesehen, die über das Schutzfeld hervorstehen und sich im hervorstehenden Teil nicht oder höchstens teilweise überlappen.

Mit den über das Schutzfeld hervorstehenden Konturerkennungsfeldern können Objekte im Vorfeld des Schutzfeldes erkannt werden. Dadurch dass die Konturerkennungsfelder zumindest näherungsweise gleiche Längen aufweisen, kann durch eine geeignete Auswertung derart, ob beide Konturerkennungsfelder frei sind oder ob in beiden Konturerkennungsfeldern ein Objekteingriff registriert wird, erfasst werden ob ein stationäres Hindernis im Vorfeld angeordnet ist. Durch die Erfassung des zeitlichen Verlaufs von Objekteingriffen in die Konturerkennungsfelder kann dabei ein solches stationäres Hindernis von Personen oder allgemein gefahrbringenden, sich bewegenden Objekten unterschieden werden.

Abhängig von den Objekteingriffen in den beiden Konturerkennungsfeldern kann so das Schutzfeld an vorhandene Hindernisse optimal angepasst werden, um insbesondere das Schutzfeld so zu dimensionieren, dass möglichst wenig Freiräume zwischen dem Schutzfeld und dem Hindernis entstehen, um so eine möglichst vollständige Überwachung eines Gefahrenbereichs zu gewährleisten.

Eine besonders vorteilhafte Anwendung besteht in einer Gefahrenbereichsüberwachung einer mobilen Maschine wie zum Beispiel einem Roboter oder einem fahrerlosen Transportfahrzeug, welches zur Durchführung von Arbeitsvorgängen auf ein stationäres Hindernis wie eine Wand zubewegt oder von diesem wegbewegt wird.

Abhängig davon ob und in welcher zeitlichen Folge Objekteingriffe in den Konturerkennungsfeldern registriert werden, wird dann das Schutzfeld vergrößert oder verkleinert, wodurch das Schutzfeld an den Raumbereich zwischen der mobilen Maschine und dem Hindernis optimal angepasst wird.

Prinzipiell würden hierzu die beiden ersten Konturerkennungsfelder bereits ausreichen, jedoch besteht die Gefahr, dass die Größe des Schutzfeldes zu schnell variiert, das heißt zu schnell umgeschaltet wird.

Um diesen unerwünschten Effekt auszuschließen ist erfindungsgemäß zusätzlich zu den ersten beiden Konturerkennungsfeldern ein drittes Konturerkennungsfeld vorgesehen. Zusätzlich kann eine Zeitüberwachungseinheit vorgesehen sein.

Das dritte Konturerkennungsfeld weist eine andere Orientierung und/oder Lage als die ersten beiden Konturerkennungsfelder auf. Auch kann die Länge des dritten Konturerkennungsfelds von den Längen der ersten beiden Konturerkennungsfelder verschieden sein, wobei dann die Orientierung und Lage des dritten Konturerkennungsfelds mit jenen der beiden ersten Konturerkennungsfelder identisch sein kann. Durch das Abprüfen, ob im dritten Konturerkennungsfeld ein Objekteingriff erfolgt oder nicht, wird eine Zusatzbedingung für eine Änderung der Größe des Schutzfeldes geschaffen, sodass ein zu schnelles Umschalten der Schutzfeldgröße vermieden wird.

Auch mit der Zeitüberwachungseinheit werden Zusatzbedingungen in Form des zeitlichen Verhaltens von Objekteingriffen in den ersten beiden Konturerkennungsfelder geschaffen, die ein zu rasches Umschalten der Schutzfeldgröße verhindern.

Gemäß einer ersten vorteilhaften Ausführungsform wird das Schutzfeld verkleinert, wenn in allen drei Konturerkennungsfeldern ein Objekteingriff registriert wird. Das Schutzfeld wird vergrößert, wenn in keinem der Konturerkennungsfelder ein Objekteingriff registriert wird.

Wird in allen Konturerkennungsfeldern ein Objekteingriff registriert, gilt ein stationäres Hindernis als erkannt. Zur Anpassung an das Hindernis wird dann das Schutzfeld verkleinert. Alle anderen Kombinationen, bei welchen nicht in allen Konturerkennungsfeldern Objekteingriffe registriert werden, werden nicht als Erkennung des Hindernisses gewertet, sodass in diesem Fall die Größe des Schutzfeldes unverändert bleibt.

Besonders vorteilhaft erfolgt eine Änderung des Schutzfeldes nur dann, wenn innerhalb eines durch die Zeitüberwachungseinheit vorgegebenen Zeitintervalls in den ersten beiden Konturerkennungsfeldern eine Zustandsänderung registriert wird.

Damit wird eine zusätzliche Bedingung für das Umschalten des Schutzfeldes definiert.

Gemäß einer zweiten vorteilhaften Ausführungsform wird das Schutzfeld verkleinert, wenn innerhalb eines durch die Zeitüberwachungseinheit vorgegebenen Zeitintervalls in den beiden ersten Konturerkennungsfeldern jeweils ein Objekteingriff registriert wird. Das Schutzfeld wird vergrößert, wenn innerhalb eines durch die Zeitüberwachungseinheit vorgegebenen Zeitintervalls die beiden ersten Konturerkennungsfelder frei werden und für ein anschließendes weiteres Zeitintervall frei bleiben.

Bei dieser Ausführungsform wird das dritte Konturerkennungsfeld nicht benötigt.

In diesem Fall gilt ein stationäres Hindernis als erkannt, wenn innerhalb des Zeitintervalls, das innerhalb einer Toleranz eine Gleichzeitigkeitsbedingung definiert, in beiden Konturerkennungsfeldern ein Objekteingriff registriert wird.

Demgegenüber gilt ein freies Vorfeld ohne stationäres Hindernis als erkannt, sobald innerhalb eines wieder eine Gleichzeitigkeitsbedingung definierenden Zeitintervalls beide Konturerkennungsfelder frei werden und daraufhin für das weitere Zeitintervall auch frei bleiben.

Gemäß einer vorteilhaften Ausgestaltung ist der optische Sensor ein Flächendistanzsensor.

Je nach Ausbildung des optischen Sensors bilden das Schutzfeld und die Konturerkennungsfelder zwei- oder dreidimensionale Bereiche aus.

Vorteilhaft sind die Konturerkennungsfelder streifenförmig ausgebildet.

Hierbei wird dem Umstand Rechnung getragen, dass zur Beurteilung, ob ein stationäres Hindernis vorliegt oder nicht, eine lokale Detektion dieses Hindernisses in den einzelnen Konturerkennungsfeldern ausreichend ist.

Vorteilhaft sind die Dimensionen der Konturerkennungsfelder zeitabhängig.

Damit können die Konturerkennungsfelder selbst an sich verändernde Schutzfeldgrößen angepasst werden. Dies kann beispielsweise derart erfolgen, dass die Längen der Konturerkennungsfelder in einem bestimmten, konstanten Verhältnis zur Länge des aktuellen Schutzfeldes stehen.

Die Erfindung wird im Folgenden anhand der Zeichnungen erläutert. Es zeigen:
- Figur 1:: Erstes Ausführungsbeispiel eines optischen Sensors.
- Figur 2:: Zweites Ausführungsbeispiel eines optischen Sensors.
- Figur 3:: Ausführungsbeispiel der erfindungsgemäßen Überwachungseinrichtung.

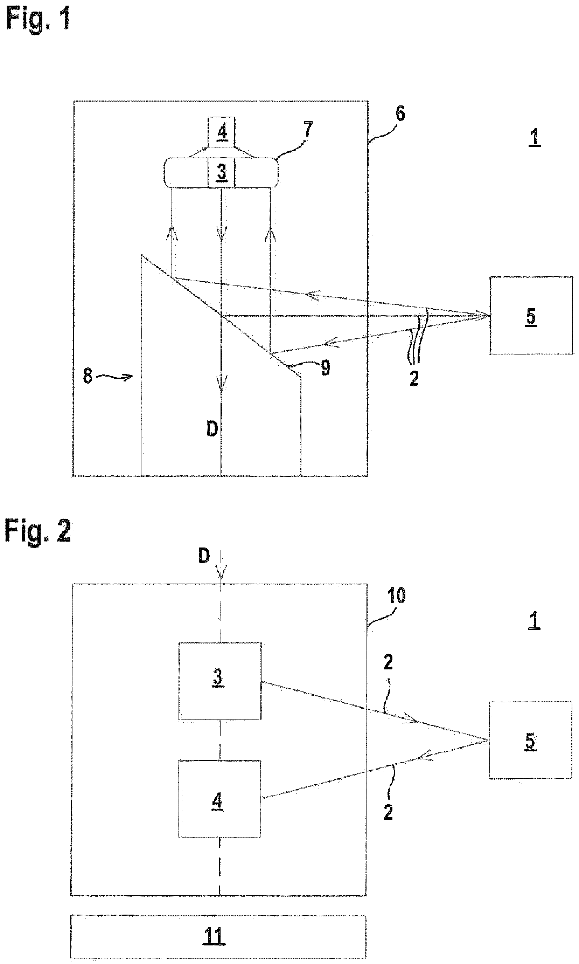

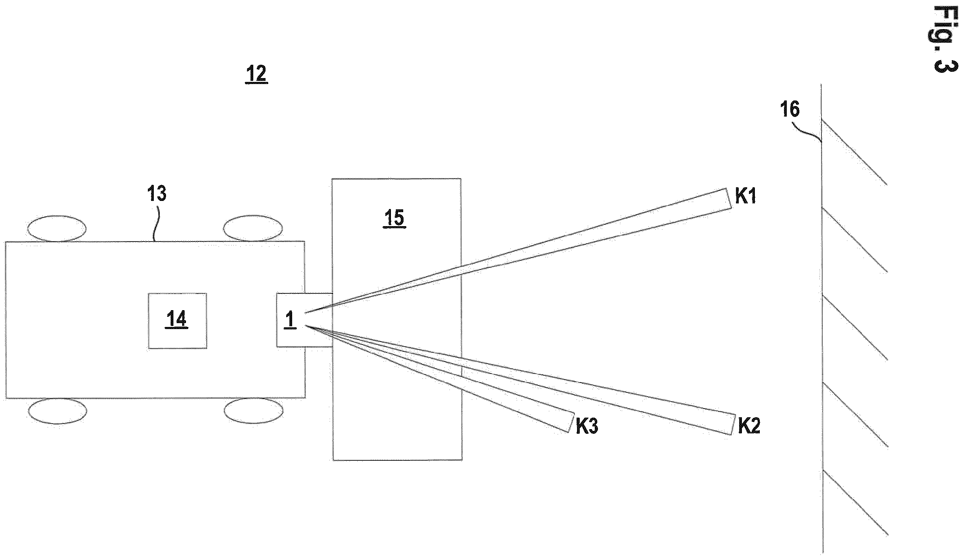

Die Figuren 1 und 2 zeigen Ausführungsbeispiele eines optischen Sensors 1, der für die erfindungsgemäße Überwachungseinrichtung 12 wie in Figur 3 beispielhaft dargestellt, eingesetzt wird.

Die Figuren 1 und 2 zeigen Ausführungsbeispiele von distanzmessenden optischen Sensoren 1, wobei die Distanzmessungen vorteilhaft nach einem Impuls-Laufzeitverfahren oder einem Phasenmessverfahren erfolgen.

Figur 1 zeigt ein Ausführungsbeispiel eines optischen Sensors 1 in Form eines Flächendistanzsensors, das heißt eines scannenden Distanzsensors. Zur Durchführung von Distanzmessungen weist der optische Sensor 1 einen Lichtstrahlen 2 emittierenden Sender 3 und einen Lichtstrahlen 2 empfangenden Empfänger 4 auf. Der Sender 3 emittiert Lichtstrahlen 2 in Form von Lichtimpulsen. Wie Figur 1 zeigt, werden die Lichtstrahlen 2 an einem zu detektierenden Objekt 5 reflektiert, wobei die entsprechende Lichtlaufzeit der Lichtimpulse zum Objekt 5 und zurück zum optischen Sensor 1 für die Distanzbestimmungen ausgewertet werden.

Wie Figur 1 zeigt, sind die Sensorkomponenten der optischen Sensoren 1 in einem Gehäuse 6 integriert, wobei der Sender 3 sowie der Empfänger 4 mit einer vorgeordneten Empfangsoptik 7 stationär im Gehäuse 6 angeordnet sind. Mit dem optischen Sensor 1 erfolgt eine Objektdetektion in einem flächigen Erfassungsbereich dadurch, dass die Lichtstrahlen 2 mittels einer Ablenkeinheit 8 periodisch abgelenkt werden. Die Ablenkeinheit 8 ist motorisch angetrieben und umfasst einen um eine Drehachse D drehbaren Winkelspiegel 9, an dem die Lichtstrahlen 2 abgelenkt werden.

Figur 2 zeigt eine Variante des Flächendistanzsensors gemäß Figur 1. In diesem Fall erfolgt die periodische Ablenkung der Lichtstrahlen 2 dadurch, dass der Sender 3 und der Empfänger 4 in einem um eine Drehachse D drehbaren Messkopf 10 angeordnet sind, wobei der Messkopf 10 auf einem Sockel 11 drehbar gelagert ist.

Generell ist jedem optischen Sensor 1 eine nicht dargestellte Auswerteeinheit zugeordnet, in der die Empfangssignale des Empfängers 4 ausgewertet werden.

Für den Einsatz im Bereich der Sicherheitstechnik sind die optischen Sensoren 1 gemäß der Figuren 1 und 2 als Sicherheitssensor ausgebildet und weisen einen fehlersicheren Aufbau auf, der beispielsweise durch eine redundante Auswerteeinheit in Form zweier sich zyklisch gegenseitig überwachender Rechnereinheiten realisiert werden kann.

Figur 3 zeigt ein Ausführungsbeispiel der erfindungsgemäßen Überwachungseinrichtung 12 mit einem optischen Sensor 1 wie in den Figuren 1 und 2 beschrieben.

Der optische Sensor 1 befindet sich an der Frontseite eines fahrerlosen Transportfahrzeugs 13, das von einer sicheren Steuerung 14 gesteuert wird. Die sichere Steuerung 14 übernimmt im vorliegenden Fall auch die Funktion der Auswerteeinheit des optischen Sensors 1 und ist hierzu mit dem optischen Sensor 1 über eine Schnittstelle, beispielsweise einem Feldbus verbunden um bidirektional Daten auszutauschen. Der Datenaustausch zwischen dem optischen Sensor 1 und der Steuerung 14 erfolgt ebenso sicher, beispielsweise über einen sicheren Feldbus.

Mit dem optischen Sensor 1 erfolgt eine Objektüberwachung eines Schutzfeldes 15. Das Schutzfeld 15 ist im vorliegenden Fall als Flächenbereich ausgebildet, der das Vorfeld des fahrerlosen Transportfahrzeugs 13 abdeckt.

Die Schutzfeld-Überwachung erfolgt derart, dass abhängig von einem Objekteingriff in einem Schutzfeld 15 ein binäres Schaltsignal generiert wird, dessen Schaltzustände angeben, ob ein Objekt im Schutzfeld 15 vorhanden ist oder nicht. Ist ein Objekt im Schutzfeld 15 vorhanden, wird durch den entsprechenden Schaltzustand des Schaltsignals eine Sicherheitsfunktion derart ausgelöst, dass eine gefahrbringende Maschine stillgesetzt wird, sodass von dieser keine Gefahren mehr ausgehen können. Im vorliegenden Fall besteht die Sicherheitsfunktion darin, das fahrerlose Transportfahrzeug 13 anzuhalten.

Erfindungsgemäß werden mit dem optischen Sensor 1 auch mehrere Konturerkennungsfelder K1, K2, K3 überwacht. Anhand der Überwachung der Konturerkennungsfelder K1, K2, K3 wird das Schutzfeld 15 angepasst, während sich das fahrerlose Transportfahrzeug 13 auf eine Wand 16 als stationäres Hindernis zubewegt oder von der Wand 16 wegbewegt. Die Anpassung der Größe des Schutzfeldes 15 erfolgt generell derart, dass mit dem Schutzfeld 15 der Bereich zwischen fahrerlosem Transportfahrzeug 13 und der Wand 16 möglichst vollständig erfasst wird.

Die Konturerkennungsfelder K1, K2, K3 bilden streifenförmige langgestreckte flächige Bereiche, die sich über den vorderen Rand des Schutzfeldes 15 hinauserstrecken und sich dort nicht überlappen.

Die zwingend erforderlichen ersten beiden Konturerkennungsfelder K1, K2 weisen zumindest näherungsweise identische Längen auf. Das dritte, optional vorgesehene Konturerkennungsfeld K3 weist dagegen eine kleinere Länge auf.

Im vorliegenden Fall wird das Schutzfeld 15 verkleinert, wenn in allen drei Konturerkennungsfeldern K1, K2, K3 ein Objekteingriff registriert wird. Das Schutzfeld 15 wird vergrößert, wenn in keinem der Konturerkennungsfeldern K1, K2, K3 ein Objekteingriff registriert wird.

Wird in keinem der Konturerkennungsfelder K1, K2, K3 ein Objekteingriff registriert, liegt die Wand 16 außerhalb des Detektionsbereichs des optischen Sensors 1 und das Schutzfeld 15 kann vergrößert werden.

Sobald in allen drei Konturerkennungsfelder K1, K2, K3 ein Objekteingriff registriert wird, gilt die Wand 16 als erkannt und das Schutzfeld 15 wird verkleinert, damit die Wand 16 nicht in das Schutzfeld 15 ragt und unnötigerweise zur Auslösung der Sicherheitsfunktion führt.

Wenn nicht in allen Konturerkennungsfeldern K1, K2, K3 ein Objekteingriff registriert wird, wird dies als Eingriff eines anderen Objekts 5 als die Wand 16 gewertet, sodass in diesem Fall die Größe des Schutzfeldes 15 unverändert bleibt.

Zusätzlich kann eine Zeitüberwachungseinheit vorgesehen sein, in der weitere Bedingungen für das Umschalten der Schutzfeldgröße definiert werden.

Insbesondere erfolgt eine Änderung des Schutzfeldes 15 nur dann, wenn innerhalb eines durch die Zeitüberwachungseinheit vorgegebenen Zeitintervalls in den ersten beiden Konturerkennungsfeldern K1, K2 eine Zustandsänderung registriert wird.

Dies stellt eine Gleichzeitigkeitsbedingung derart dar, dass innerhalb einer durch das Zeitintervall vorgegebenen Toleranz gleichzeitig in beiden Konturerkennungsfeldern K1, K2 Objekteingriffe auftreten müssen, damit die Wand 16 als erkannt gilt und dann das Schutzfeld 15 verkleinert wird.

Entsprechend wird als Bedingung für eine Vergrößerung des Schutzfeldes 15 gefordert, dass die Konturerkennungsfelder K1, K2 innerhalb des Zeitintervalls beide frei werden, das heißt ein Objekteingriff nicht mehr vorhanden ist.

Gemäß einer alternativen Ausführungsform kann das Konturerkennungsfeld K3 weggelassen werden, sodass nur noch die beiden Konturerkennungsfelder K1, K2 verbleiben.

In diesem Fall sind durch die Zeitüberwachungseinheit vorgegebene Zeitbedingungen zwingend für eine Umschaltung der Schutzfeldgröße.

Dabei ist vorgesehen, dass das Schutzfeld 15 verkleinert wird, wenn innerhalb eines durch die Zeitüberwachungseinheit vorgegebenen Zeitintervalls in den beiden ersten Konturerkennungsfeldern K1, K2 jeweils ein Objekteingriff registriert wird. Das Schutzfeld 15 wird vergrößert, wenn die beiden ersten Konturerkennungsfelder K1, K2 frei werden und für ein anschließendes weiteres Zeitintervall frei bleiben.

### Bezugszeichenliste

- (1): Optischer Sensor
- (2): Lichtstrahl
- (3): Sender
- (4): Empfänger
- (5): Objekt
- (6): Gehäuse
- (7): Empfangsoptik
- (8): Ablenkeinheit
- (9): Winkelspiegel
- (10): Messkopf
- (11): Sockel
- (12): Überwachungseinrichtung
- (13): fahrerloses Transportfahrzeug
- (14): Steuerung
- (15): Schutzfeld
- (16): Wand

- D: Drehachse
- K1: Konturerkennungsfeld
- K2: Konturerkennungsfeld
- K3: Konturerkennungsfeld

## Patentansprüche

1. Überwachungseinrichtung (12) mit einem optischen Sensor (1), mittels dessen eine Objektüberwachung innerhalb eines Schutzfeldes (15) durchgeführt wird, wobei zwei Konturerkennungsfelder (K1, K2) mit einander zumindest näherungsweise entsprechenden Längen vorgesehen sind, wobei die Längen so dimensioniert sind, dass die Konturerkennungsfelder (K1, K2) über das Schutzfeld (15) hervorstehen und dort zumindest teilweise nicht überlappen, wobei ein über das Schutzfeld (15) hervorstehendes mit den ersten beiden Konturerkennungsfeldern (K1, K2) zumindest teilweise nicht überlappendes drittes Konturerkennungsfeld (K3) vorgesehen ist und eine Zeitüberwachungseinheit vorgesehen ist, mittels derer die zeitliche Folge von Objekteingriffen in den beiden ersten Konturerkennungsfeldern (K1, K2) überprüfbar ist, **dadurch gekennzeichnet, dass** abhängig davon, ob und in welcher zeitlichen Reihenfolge Objekteingriffe in den ersten beiden Konturerkennungsfeldern Objekteingriffe registriert werden und abhängig davon ob im dritten Konturerkennungsfeld (K3) ein Objekteingriff vorliegt oder nicht, das Schutzfeld vergrößert oder verkleinert wird

2. Überwachungseinrichtung (12) nach Anspruch 1, **dadurch gekennzeichnet, dass** abhängig von Kontrollsignalen der Zeitüberwachungseinheit das Schutzfeld (15) vergrößert oder verkleinert wird.

3. Überwachungseinrichtung (12) nach einem der Ansprüche 1 oder 2, **dadurch gekennzeichnet, dass** das Schutzfeld (15) verkleinert wird, wenn in allen drei Konturerkennungsfeldern (K1, K2, K3) ein Objekteingriff registriert wird, und dass das Schutzfeld (15) vergrößert wird, wenn in keinem der Konturerkennungsfeldern (K1, K2, K3) ein Objekteingriff registriert wird.

4. Überwachungseinrichtung (12) nach Anspruch 2, **dadurch gekennzeichnet, dass** eine Änderung des Schutzfeldes (15) nur dann erfolgt, wenn innerhalb eines durch die Zeitüberwachungseinheit vorgegebenen Zeitintervalls in den ersten beiden Konturerkennungsfeldern (K1, K2) eine Zustandsänderung registriert wird.

5. Überwachungseinrichtung (12) nach Anspruch 2, **dadurch gekennzeichnet, dass** das Schutzfeld (15) verkleinert wird, wenn innerhalb eines durch die Zeitüberwachungseinheit vorgegebenen Zeitintervalls in den beiden ersten Konturerkennungsfeldern (K1, K2) jeweils ein Objekteingriff registriert wird, und dass das Schutzfeld (15) vergrößert wird, wenn die beiden ersten Konturerkennungsfelder (K1, K2) frei werden und für ein anschließendes weiteres Zeitintervall frei bleiben.

6. Überwachungseinrichtung (12) nach einem der Ansprüche 1 bis 5, **dadurch gekennzeichnet, dass** der optische Sensor (1) ein Flächendistanzsensor ist.

7. Überwachungseinrichtung (12) nach einem der Ansprüche 1 bis 6, **dadurch gekennzeichnet, dass** das Schutzfeld (15) und die Konturerkennungsfelder (K1, K2, K3) zwei- oder dreidimensionale Bereiche ausbilden.

8. Überwachungseinrichtung (12) nach einem der Ansprüche 1 bis 7, **dadurch gekennzeichnet, dass** die Konturerkennungsfelder (K1, K2, K3) streifenförmig ausgebildet sind.

9. Überwachungseinrichtung (12) nach einem der Ansprüche 1 bis 8, **dadurch gekennzeichnet, dass** das dritte Konturerkennungsfeld (K3) eine Länge aufweist, die von den Längen der ersten beiden Konturerkennungsfelder (K1, K2) verschieden ist.

10. Überwachungseinrichtung (12) nach einem der Ansprüche 1 bis 9, **dadurch gekennzeichnet, dass** die Dimensionen der Konturerkennungsfelder (K1, K2, K3) zeitabhängig sind.

11. Überwachungseinrichtung (12) nach einem der Ansprüche 1 bis 10, **dadurch gekennzeichnet, dass** der optische Sensor eine Auswerteeinheit aufweist, oder dass dem optischen Sensor (1) eine externe Auswerteeinheit zugeordnet ist.

12. Überwachungseinrichtung (12) nach Anspruch 11, **dadurch gekennzeichnet, dass** die externe Auswerteeinheit eine sichere Steuerung (14) ist, die über eine Schnittstelle mit dem optischen Sensor (1) verbunden ist.

13. Überwachungseinrichtung (12) nach einem der Ansprüche 11 oder 12, **dadurch gekennzeichnet, dass** in der Auswerteeinheit abhängig von Sensorsignalen des optischen Sensors (1) ein Schaltsignal generiert wird, dessen Schaltzustände angeben ob sich ein Objekt (5) im Schutzfeld (15) befindet oder nicht.

14. Überwachungseinrichtung (12) nach Anspruch 13, **dadurch gekennzeichnet, dass** bei einer Objektdetektion im Schutzfeld (15) eine Sicherheitsfunktion ausgelöst wird.

15. Überwachungseinrichtung (12) nach einem der Ansprüche 1 bis 14, **dadurch gekennzeichnet, dass** mit dieser eine Gefahrenbereichsüberwachung an einer mobilen Maschine durchgeführt wird.

16. Überwachungseinrichtung (12) nach Anspruch 15, **dadurch gekennzeichnet, dass** die mobile Maschine ein Roboter oder ein fahrerloses Transportfahrzeug (13) ist.

17. Verfahren zum Betrieb einer Überwachungseinrichtung (12) mit einem optischen Sensor (1), mittels dessen eine Objektüberwachung innerhalb eines Schutzfeldes (15) durchgeführt wird, wobei zwei Konturerkennungsfelder (K1, K2) mit einander zumindest näherungsweise entsprechenden Längen vorgesehen sind, wobei die Längen so dimensioniert sind, wobei die Konturerkennungsfelder (K1, K2) über das Schutzfeld (15) hervorstehen und dort zumindest teilweise nicht überlappen, dass entweder ein über das Schutzfeld (15) hervorstehendes mit den ersten beiden Konturerkennungsfeldern (K1, K2) zumindest teilweise nicht überlappendes drittes Konturerkennungsfeld (K3) vorgesehen ist und/oder eine Zeitüberwachungseinheit vorgesehen ist, mittels derer die zeitliche Folge von Objekteingriffen in den beiden ersten Konturerkennungsfeldern (K1, K2) überprüfbar ist, **dadurch gekennzeichnet, dass** abhängig davon, ob und in welcher zeitlichen Reihenfolge Objekteingriffe in den ersten beiden Konturerkennungsfeldern Objekteingriffe registriert werden und abhängig davon ob im dritten Konturerkennungsfeld (K3) ein Objekteingriff vorliegt oder nicht das Schutzfeld (15) vergrößert oder verkleinert wird.

## Claims

1. A monitoring device (12) with an optical sensor (1), by means of which object monitoring is carried out within a protective field (15), wherein two contour detection fields (Kl, K2) with at least approximately corresponding lengths are provided, wherein the lengths are dimensioned such that the contour detection fields (Kl, K2) project beyond the protective field (15) and at least partially do not overlap there, wherein a third contour detection field (K3) projecting beyond the protective field (15) and at least partially not overlapping with the first two contour detection fields (Kl, K2), which at least partially does not overlap, is provided and a time monitoring unit is provided, by means of which the temporal sequence of object interventions in the two first contour detection fields (K1, K2) can be checked, **characterised in that** object interventions are registered depending on whether and in what temporal sequence object interventions are registered in the first two contour detection fields and depending on whether or not there is an object intervention in the third contour detection field (K3); the protective field is enlarged or reduced.

2. A monitoring device (12) according to claim 1, **characterised in that** the protective field (15) is enlarged or reduced depending on control signals from the time monitoring unit.

3. A monitoring device (12) according to one of claims 1 or 2, **characterised in that** the protective field (15) is reduced if an object engagement is registered in all three contour detection fields (Kl, K2, K3), and **in that** the protective field (15) is enlarged if an object engagement is not registered in any of the contour detection fields (Kl, K2, K3).

4. A monitoring device (12) according to claim 2, **characterised in that** a change of the protective field (15) only takes place if a change of state is registered in the first two contour detection fields (K1, K2) within a time interval specified by the time monitoring unit.

5. A monitoring device (12) according to claim 2, **characterised in that** the protective field (15) is reduced when an object intervention is registered in each of the two first contour detection fields (K1, K2) within a time interval predetermined by the time monitoring unit, and **in that** the protective field (15) is enlarged when the two first contour detection fields (Kl, K2) become free and remain free for a subsequent further time interval.

6. A monitoring device (12) according to one of claims 1 to 5, **characterised in that** the optical sensor (1) is an area distance sensor.

7. A monitoring device (12) according to one of claims 1 to 6, **characterised in that** the protective field (15) and the contour detection fields (K1, K2, K3) form two- or three-dimensional areas.

8. A monitoring device (12) according to one of claims 1 to 7, **characterised in that** the contour detection fields (K1, K2, K3) are in the form of strips.

9. A monitoring device (12) according to one of claims 1 to 8, **characterised in that** the third contour detection field (K3) has a length which is different from the lengths of the first two contour detection fields (K1, K2).

10. A monitoring device (12) according to one of claims 1 to 9, **characterised in that** the dimensions of the contour detection fields (K1, K2, K3) are time-dependent.

11. A monitoring device (12) according to one of claims 1 to 10, **characterised in that** the optical sensor has an evaluation unit, or **in that** an external evaluation unit is assigned to the optical sensor (1).

12. A monitoring device (12) according to claim 11, **characterised in that** the external evaluation unit is a secure controller (14) which is connected to the optical sensor (1) via an interface.

13. A monitoring device (12) according to one of claims 11 or 12, **characterised in that** a switching signal is generated in the evaluation unit as a function of sensor signals of the optical sensor (1), the switching states of which indicate whether an object (5) is located in the protective field (15) or not.

14. A monitoring device (12) according to claim 13, **characterised in that** a safety function is triggered when an object is detected in the protective field (15).

15. A monitoring device (12) according to one of claims 1 to 14, **characterised in that** it is used to monitor a danger zone on a mobile machine.

16. A monitoring device (12) according to claim 15, **characterised in that** the mobile machine is a robot or a driverless transport vehicle (13).

17. A method for operating a monitoring device (12) with an optical sensor (1), by means of which object monitoring is carried out within a protective field (15), wherein two contour detection fields (Kl, K2) with at least approximately corresponding lengths are provided, wherein the lengths are dimensioned such that the contour detection fields (Kl, K2) protrude beyond the protective field (15) and at least partially do not overlap there, that either a contour detection field (Kl, K2) protruding beyond the protective field (15) at least partially does not overlap with the first two contour detection fields (Kl, K2), which at least partially does not overlap there, is provided and/or a time monitoring unit is provided, by means of which the time sequence of object interventions in the two first contour detection fields (Kl, K2) can be checked, **characterised in that** that the protective field (15) is enlarged or reduced depending on whether and in what time sequence object interventions are registered in the first two contour detection fields and depending on whether or not there is an object intervention in the third contour detection field (K3).

## Revendications

1. Dispositif de surveillance (12) avec un capteur optique (1), au moyen duquel une surveillance d'objet est effectuée à l'intérieur d'un champ de protection (15), dans lequel deux champs de détection de contour (Kl, K2) avec des longueurs au moins approximativement correspondantes sont prévus, dans lequel les longueurs sont dimensionnées de telle sorte que les champs de détection de contour (Kl, K2) dépassent le champ de protection (15) et au moins partiellement ne s'y chevauchent pas, dans lequel un troisième champ de détection de contour (K3) dépassant le champ de protection (15) et au moins partiellement ne se chevauchant pas avec les deux premiers champs de détection de contour (Kl, K2), qui au moins partiellement ne se chevauche pas, est prévu et une unité de surveillance du temps est prévue, au moyen de laquelle la séquence temporelle des interventions d'objets dans les deux premières zones de détection de contour (K1, K2) peut être vérifiée, **caractérisée en ce que** les interventions d'objets sont enregistrées selon que et dans quelle séquence temporelle des interventions d'objets sont enregistrées dans les deux premières zones de détection de contour et selon qu'il y a ou non une intervention d'objet dans la troisième zone de détection de contour (K3) ; le champ de protection est agrandi ou réduit.

2. Dispositif de surveillance (12) selon la revendication 1, **caractérisé en ce que** le champ de protection (15) est agrandi ou réduit en fonction des signaux de commande de l'unité de surveillance temporelle.

3. Dispositif de surveillance (12) selon l'une des revendications 1 ou 2, **caractérisé en ce que** le champ de protection (15) est réduit si un engagement d'objet est enregistré dans les trois champs de détection de contour (Kl, K2, K3), et **en ce que** le champ de protection (15) est agrandi si un engagement d'objet n'est enregistré dans aucun des champs de détection de contour (Kl, K2, K3).

4. Dispositif de surveillance (12) selon la revendication 2, **caractérisé en ce qu'**une modification du champ de protection (15) n'a lieu que si un changement d'état est enregistré dans les deux premiers champs de détection de contour (K1, K2) dans un intervalle de temps spécifié par l'unité de surveillance du temps.

5. Dispositif de surveillance (12) selon la revendication 2, **caractérisé en ce que** le champ de protection (15) est réduit lorsqu'une intervention d'objet est enregistrée dans chacun des deux premiers champs de détection de contour (K1, K2) dans un intervalle de temps prédéterminé par l'unité de surveillance du temps, et **en ce que** le champ de protection (15) est agrandi lorsque les deux premiers champs de détection de contour (Kl, K2) deviennent libres et restent libres pendant un autre intervalle de temps ultérieur.

6. Dispositif de surveillance (12) selon l'une des revendications 1 à 5, **caractérisé en ce que** le capteur optique (1) est un capteur de distance de zone.

7. Dispositif de surveillance (12) selon l'une des revendications 1 à 6, **caractérisé en ce que** le champ de protection (15) et les champs de détection des contours (K1, K2, K3) forment des zones bidimensionnelles ou tridimensionnelles.

8. Dispositif de surveillance (12) selon l'une des revendications 1 à 7, **caractérisé en ce que** les champs de détection des contours (K1, K2, K3) se présentent sous forme de bandes.

9. Dispositif de surveillance (12) selon l'une des revendications 1 à 8, **caractérisé en ce que** la troisième zone de détection de contour (K3) a une longueur différente des longueurs des deux premières zones de détection de contour (K1, K2).

10. Dispositif de surveillance (12) selon l'une des revendications 1 à 9, **caractérisé en ce que** les dimensions des champs de détection de contours (K1, K2, K3) dépendent du temps.

11. Dispositif de surveillance (12) selon l'une des revendications 1 à 10, **caractérisé en ce que** le capteur optique possède une unité d'évaluation, ou **en ce qu'**une unité d'évaluation externe est affectée au capteur optique (1).

12. Dispositif de surveillance (12) selon la revendication 11, **caractérisé en ce que** l'unité d'évaluation externe est un contrôleur sécurisé (14) qui est relié au capteur optique (1) par une interface.

13. Dispositif de surveillance (12) selon l'une des revendications 11 ou 12, **caractérisé en ce qu'**un signal de commutation est généré dans l'unité d'évaluation en fonction des signaux de capteur du capteur optique (1), dont les états de commutation indiquent si un objet (5) se trouve dans le champ de protection (15) ou non.

14. Dispositif de surveillance (12) selon la revendication 13, **caractérisé en ce qu'**une fonction de sécurité est déclenchée lorsqu'un objet est détecté dans le champ de protection (15).

15. Dispositif de surveillance (12) selon l'une des revendications 1 à 14, **caractérisé en ce qu'**il est utilisé pour surveiller une zone de danger sur une machine mobile.

16. Dispositif de surveillance (12) selon la revendication 15, **caractérisé en ce que** la machine mobile est un robot ou un véhicule de transport sans conducteur (13).

17. Procédé d'exploitation d'un dispositif de surveillance (12) doté d'un capteur optique (1), au moyen duquel une surveillance d'objet est effectuée à l'intérieur d'un champ de protection (15), dans lequel deux champs de détection de contour (Kl, K2) avec des longueurs au moins approximativement correspondantes sont prévus, les longueurs sont dimensionnées de telle sorte que les champs de détection de contour (Kl, K2) dépassent le champ de protection (15) et ne s'y chevauchent pas au moins partiellement, qu'un champ de détection de contour (Kl, K2) dépassant le champ de protection (15) ne se chevauche pas au moins partiellement avec les deux premiers champs de détection de contour (Kl, K2), qui au moins partiellement ne s'y chevauche pas, est prévu et/ou qu'une unité de contrôle du temps est prévue, au moyen de laquelle la séquence temporelle des interventions d'objets dans les deux premières zones de détection de contour (Kl, K2) peut être vérifiée, **caractérisée en ce que** le champ de protection (15) est agrandi ou réduit selon que et dans quelle séquence temporelle des interventions d'objets sont enregistrées dans les deux premières zones de détection de contour et selon qu'il y a ou non une intervention d'objet dans la troisième zone de détection de contour (K3).
